# EUROPÄISCHE PATENTSCHRIFT

(11) **EP 1 451 059 B1**
(45) Veröffentlichungstag und Bekanntmachung des Hinweises auf die Patenterteilung: **14.02.2007**
(21) Anmeldenummer: 02804216.6
(22) Anmeldetag: 03.12.2002
(51) Int. Cl.: B62D 53/12

(54) **UBERWACHUNGS- UND STEUEREINRICHTUNG FUR SATTELZUG MIT FERNBEDIENBARER SATTELKUPPLUNG**
MONITORING AND CONTROL DEVICE FOR AN ARTICULATED LORRY WITH REMOTE-CONTROLLABLE FIFTH WHEEL
DISPOSITIF DE COMMANDE ET DE SURVEILLANCE POUR SEMI-REMORQUE A SELLETTE D'ATTELAGE TELECOMMANDABLE

(30) Priorität: 04.12.2001 DE 10159503
(43) Veröffentlichungstag der Anmeldung: 01.09.2004
(73) Patentinhaber: Jost-Werke GmbH & Co. KG, 60528 Frankfurt am Main (DE)
(72) Erfinder: ALGÜERA, José, Manuel, 63739 Aschaffenburg (DE)
(74) Vertreter: Fuchs Mehler Weiss & Fritzsche
(86) Internationale Anmeldenummer: PCT/EP2002/013655
(87) Internationale Veröffentlichungsnummer: WO 2003/047952

(56) Entgegenhaltungen:
- DE-A- 19 840 007
- US-A- 3 628 811
- US-A- 4 863 184
- US-A- 5 335 930
- US-A- 5 458 357
- US-A- 5 861 802
- US-B1- 6 250 650

## Beschreibung

Die Erfindung betrifft eine Überwachungs- und Steuervorrichtung für Sattelzüge mit einem Zugfahrzeug mit fernbedienbarer Sattelkupplung und einem Auflieger mit mindestens einer elektrisch betriebenen Einrichtung, wie Stützwinden.

Eine Vorrichtung zum fernbedienbaren Anschließen der Versorgungsleitung zwischen dem Zugfahrzeug und einem Auflieger wird in der DE 198 40 007 A1 beschrieben. Bei der bekannten Vorrichtung findet die Kraftübertragung zwischen Auflieger und Zugfahrzeug mit einer herkömmlichen Sattelkupplung auf der Zugfahrzeugseite und einem Königszapfen auf der Aufliegerseite statt. Das An- und Abkoppeln der Versorgungsleitungen wird in einer räumlich von der Sattelkupplung entfernten, eigenständigen Versorgungskupplung realisiert. Die Versorgungskupplung umfaßt einen schwenkbar an dem Zugfahrzeug befestigten Roboterarm, an dessen Ende sich eine Anschlagvorrichtung befindet und eine fest an der Ladewand des Aufliegers befestigte Aufnahme. Beim Ankuppeln des Aufliegers schwenkt der Roboterarm, angetrieben von einem Stellmotor mit der Anschlagvorrichtung in Richtung Auflieger, bis die Anschlagvorrichtung in die Aufnahme eingreift. Zum Abkuppeln des Aufliegers werden die Arbeitsschritte in umgekehrter Reihenfolge durchgeführt. Ein wesentlicher Nachteil dieses Systems liegt in dem mechanisch anfälligen Roboterarm, der in dem Bauraum zwischen Zugfahrzeug und Auflieger angeordnet ist. Darüber hinaus fehlt bei Aufliegern zum Transport von Containern die Ladewand, so daß hilfsweise Konstruktionen an den Aufliegern vorgenommen werden müssen, die sich jedoch bei dem Be- und Entladen des Containers nicht störend auswirken dürfen.

Weiterhin lässt sich mit vertretbarem Aufwand nur ein eingeschränktes Abwinkeln des Zugfahrzeuges zum Auflieger erreichen, was den Einsatz insbesondere bei Baustellenfahrzeugen einschränkt.

Eine Sattelkupplung, bei der die Versorgungsleitungen der Druckluft- und Stromversorgung des Aufliegers durch die Sattelkupplung und den Königszapfen erfolgt, wird in der EP 0 816 211 A2 beschrieben. Der Königszapfen weist dazu einen größeren Durchmesser als die standardisierten 50 mm auf, wodurch das System nicht kompatibel zu den weltweit gängigen Sattelkupplungen eingesetzt werden kann.

Die Druckschriften DE 19 840 007 A1 und die EP 0 816 211 A2 offenbaren Vorrichtungen, mit denen ein automatisiertes An- und Abkoppeln durchführbar wird. Diese Vorrichtungen ermöglichen jedoch keine Rückmeldung über Betriebszustände des Aufliegers bzw. ein interaktives Eingreifen des Fahrers. Darüber hinaus sind die bekannten Vorrichtungen anfällig im Betrieb und teuer in der Anschaffung. Die unangenehmen und zeitaufwendigen Arbeiten, nämlich das manuelle Öffnen der Kupplung und Kurbeln der Winde, müssen vom Fahrer ausgeführt werden.

Die gattungsgemäße US 4,863,184 beschreibt eine Steuervorrichtung, mit der über eine Bedienkonsole elektromotorisch angetriebene Stützwinden an einem Auflieger verfahren werden können. In einer gewünschten Verriegelungsposition der Stützwinden wird diese mittels mehrerer federvorgespannter Sicherungsbolzen fixiert, wobei die Sicherungsbolzen in der Verriegelungsposition durch Bohrungen in der Wandung des Außenrohres der Stützwinde hindurchreichen und mit dem Innenrohr verrasten. Zum Verfahren der Stützwinden werden auf die Sicherungsbolzen wirkende Elektromagneten aktiviert und dadurch die Sicherungsbolzen aus der Verrastung des jeweiligen Innenrohres gegen die Federspannung herausgezogen. Das Vorhandensein einer entsprechenden Verriegelungsposition wird über Markierungen auf dem Innenrohr der Stützwinde und entsprechende Sensoren erkannt und dem Bediener über eine Signaleinheit auf der Bedienkonsole angezeigt. Der Bediener kann nun die Stützwinden sicher in dieser bestimmten Position verriegeln. Die Sensoren zum Erkennen einer Verriegelungsposition ergeben zusammen mit den Elektromagneten zum Entriegeln der Sicherungsbolzen die Sicherungsvorrichtung. Der wesentliche Nachteil dieses bekannten Systems liegt darin, dass keine Fahrzeugdaten zur Vermeidung einer Fehlbedienung des Fahrers einbezogen werden und daher ein erhebliches Unfallrisiko besteht.

Es ist daher die Aufgabe der Erfindung, eine Vorrichtung bereitzustellen, die dem Fahrer die zeit- und arbeitsintensiven Arbeitsschritte beim An- und Abkuppeln des Aufliegers an dem Zugfahrzeug erleichtert und dabei die Unfallgefahr verringert.

Die Aufgabe wird mittels einer Überwachungs- und Steuervorrichtung gemäß Anspruch 1 mit einem auf dem Zugfahrzeug angeordneten Steuergerät, gelöst, bei dem auf dem Zugfahrzeug ein Steuergerät anordbar ist, wobei das Steuergerät mit der Sattelkupplung elektrisch verbindbar und an ein Zentralsteuergerät des Zugfahrzeuges anschließbar ist, und bei dem mindestens ein zweites Kommunikationsgerät auf dem Auflieger anordbar ist, wobei das Steuergerät und das Kommunikationsgerät drahtlos miteinander verbunden sind und wobei in dem steuergerät unter Berücksichtigung der Fahrzeugdaten aus dem Zentralsteuergerät eine logische überprüfung der Eingabe des Fahrers stattfindet.

Die erfindungsgemäße Vorrichtung bietet den Vorteil, dass im einfachsten Fall eine Betätigung des angeschlossenen elektrisch betriebenen Einrichtung möglich ist, ohne dass der Fahrer hierzu das Fahrzeug verlassen muss. Darüber hinaus ist es auch möglich, Zustandsabfragen der angeschlossenen Einrichtungen durchzuführen und einzubeziehen. So kann beispielsweise die Betätigung der elektrischen Einrichtung oder Einrichtungen auf dem Auflieger von bestimmten Zuständen dieser Einrichtungen oder der Sattelkupplung abhängig gemacht werden. In diesen Fällen übemimmt das erste Steuergerät zusätzliche Funktionen, wobei unter Umständen auch Regelfunktionen einbezogen werden können. Bei komplexen Systemen auf dem Auflieger kann es von Vorteil sein, wenn das auf dem Auflieger angeordnete Kommunikationsgerät ebenfalls Steuerfunktionen übernimmt.

Das Zentralsteuergerät liefert dem ersten Steuergerät Daten bezüglich des Betriebszustandes der Zugmaschine, wie z.B. die Fahrgeschwindigkeit, die vom Steuergerät dahingehend ausgewertet wird, dass ein Öffnen der Sattelkupplung während der Fahrt nicht möglich ist.

In einer bevorzugten Ausführungsform weist das erste Steuergerät ein erstes Sender-Empfängermodul auf. Hierdurch wird beispielsweise ein Datenaustausch zu anderen Schnittstellen möglich, ohne Rücksicht auf Bauraumbeschränkungen am Zugfahrzeug, da das Sender- Empfängermodul, falls es nicht in das erste Steuergerät integriert ist, auch räumlich entfernt von dem Steuergerät angebracht werden kann.

In einer günstigen Ausführungsform ist das Steuergerät mit an der Sattelkupplung angeordneten Sensoren verbunden. Mit diesen Sensoren wird beispielsweise der Öffnungszustand der Sattelkupplung sensiert und dem Steuergerät gemeldet.

Vorzugsweise ist das Steuergerät mit einem Stellmotor des Verriegelungsmechanismus der Sattelkupplung verbunden. Ein über einen Stellmotor betätigbarer Verriegelungsmechanismus entlastet den Fahrer, da er das Ver- und Entriegeln der Sattelkupplung nicht mehr von Hand vornehmen muss.

In einer besonderen Ausführungsform ist das Steuergerät mit einer im Fahrerhaus befindlichen Anzeige- und Eingabeeinrichtung verbunden. Hiermit werden die Informationen des Steuergerätes dem Fahrer visualisiert. Gleichzeitig kann der Fahrer über eine Eingabeeinrichtung beispielsweise die Verriegelungseinrichtung der Sattelkupplung betätigen.

Vorzugsweise ist das Kommunikationsgerät in einer der elektrischen Stützwinden integriert. Dadurch wird vorhandener, nicht genutzter Bauraum ausgefüllt.

In einer weiteren Ausführungsform kann das Kommunikationsgerät mit einem zweiten Sender-Empfängermodul verbunden sein. Dieses tauscht Daten mit dem ersten Sender-Empfängermodul aus und kann, falls es nicht in das Kommunikationsgerät integriert ist, an einer günstigen Position räumlich entfernt vom Kommunikationsgerät am Auflieger angebracht sein.

In einer besonderen Ausführungsform ist das Kommunikationsgerät mit einem Motor in den elektrischen Stützwinden verbunden. Der Fahrer kann vom Führerhaus aus das Aus- oder Einfahren der Stützwinden ohne körperliche Anstrengungen ausführen. Dieser Vorgang kann zunächst durch logische Abfrage des Zentral-Steuergerätes, beispielsweise der Fahrgeschwindigkeit, erfolgen. Durch eine Signalübertragung über das erste und zweite Sender-Empfängermodul kann nachfolgend der Motor der Stützwinde ein Signal aus dem Kommunikationsgerät erhalten, die elektrischen Stützwinden zu verfahren.

Vorzugsweise ist das Kommunikationsgerät über eine Ringleitung und ein Bussystem mit den elektrischen Verbrauchern des Aufliegers verbunden. In dieser Ausführungsform werden durch das Kommunikationsgerät weitere elektrische Verbraucher des Aufliegers angesteuert. Dieses kann unter Zuhilfenahme des Bussystems mit einer an alle Verbraucher angeschlossenen Ringleitung erfolgen.

Alternativ zu der Ansteuerung der elektrischen Verbraucher über eine Ringleitung besteht auch die Möglichkeit, von dem Kommunikationsgerät den jeweiligen Verbraucher über ein Kabel zu verbinden.

Darüber hinaus kann auch jede elektrisch betriebene Einrichtung des Aufliegers mit einem eigenen Kommunikationsgerät ausgestattet sein, das mit dem Steuergerät in Verbindung steht.

In einer bevorzugten Ausführungsform tauscht das drahtlos mit dem Kommunikationsgerät verbundene Steuergerät codierte Signale aus. Der Fahrer kann beispielsweise einen Chipkartenschlüssel in der Fahrerkabine in die Anzeige- und Eingabeeinrichtung einführen, so daß er damit die Möglichkeit erhält, nur für ihn bestimmte Auflieger mit seinem Zugfahrzeug aufnehmen zu können.

Vorzugsweise überträgt das drahtlos mit dem Kommunikationsgerät verbundene Steuergerät über Funk die Signale. Alternativ ist jedoch auch ein Signalaustausch über Ultraschall, induktiv oder über eine Infrarotschnittstelle möglich.

Die Energieversorgung der auf dem Auflieger befindlichen elektrischen Einrichtungen kann über eine auf dem Auflieger angeordnete Batterie oder den Königszapfen erfolgen.

Anhand von Ausführungsbeispielen soll die Erfindung näher erläutert werden. Es zeigen die
- Figur 1: eine schematische Seitenansicht eines Sattelzuges mit Anordnung der wesentlichen Systemkomponenten
- Figur 2: eine schematische Draufsicht des Aufliegers mit einer Kabelverbindung zu jedem Verbraucher;
- Figur 3: eine Ansicht entsprechend Figur 2 mit einer Ringleitung und einem Bussystem;
- Figur 4: eine Ansicht entsprechend Figur 2 mit einer Ringleitung, einem Sender-Empfängermodul und einem Kommunikationsgerät an jedem Verbraucher.

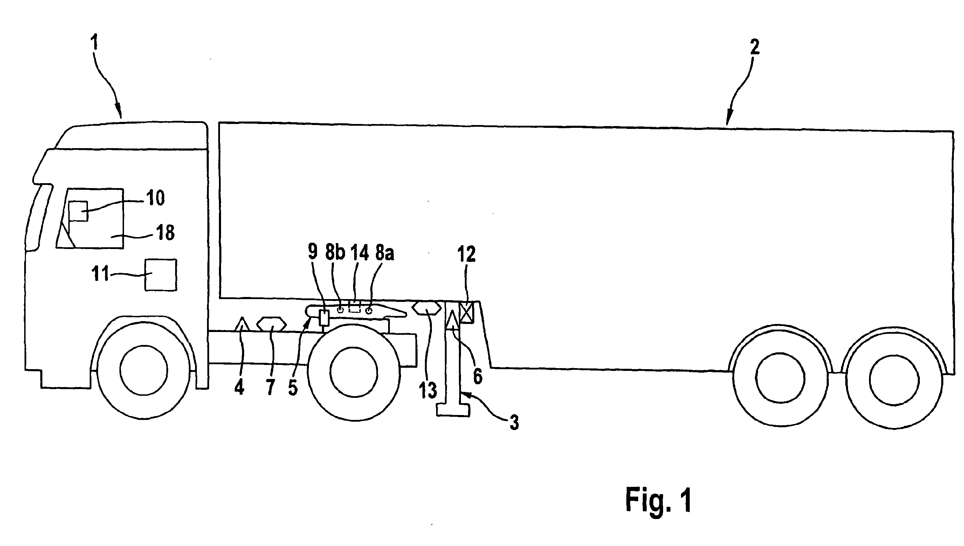

Die Figur 1 zeigt einen Sattelzug mit einer Zugmaschine 1 und einem Auflieger 2, der über einen Königszapfen 14 und eine Sattelkupplung 5 miteinander verbunden ist.

Die Fixierung des Königszapfen 14 in der Sattelkupplung 5 bzw. der Öffnungszustand der Verriegelungseinrichtung wird über an der Sattelkupplung 5 angeordnete Sensoren 8a,b sensiert. Das Öffnen und Schließen der Sattelkupplung 5 erfolgt fernbedienbar aus dem Fahrerhaus 18 des Zugfahrzeuges 1 über einen Stellmotor 9, der die nicht dargestellte Verriegelungseinrichtung betätigt.

In räumlicher Nähe zu der Sattelkupplung 5 befinden sich auf dem Zugfahrzeug 1 ein Steuergerät 4 und ein erstes Sender-Empfängermodul 7. Das Steuergerät 4 ist mit den Sensoren 8a,b der Sattelkupplung 5 und dem ersten Sender-Empfängermodul 7 über nicht dargestelltes Kabel verbunden. Weitere ebenfalls nicht dargestellte Kabel verlaufen von dem Steuergerät 4 zu den im Fahrerhaus 18 angebrachten Systemkomponenten Anzeige- und Eingabeeinrichtung 10 sowie einem Zentralsteuergerät 11 des Zugfahrzeugs 1.

Der Auflieger 2 weist mit jeweils einem Motor 12 verfahrbare Stützwinden 3 auf, wobei im Gehäuse einer Stützwinde ein Kommunikationsgerät 6 angeordnet ist. Das Kommunikationsgerät 6 ist über nicht dargestellte Kabel mit einem zweiten Sender-Empfängermodul 13 und den Motoren 12 der Stützwinden 3 verbunden.

Im Fahrbetrieb erhält der Fahrer Informationen über den Betriebszustand der elektrischen Verbraucher 15 des Aufliegers 2, z.B. der Stützwinden 3 und des Verriegelungszustandes der Sattelkupplung 5 auf der Anzeige- und Eingabeeinrichtung 10 dargestellt. Hierzu wird der Betriebszustand der Stützwinden 3 über das Kommunikationsgerät 6 und das zweite Sende-Empfängermodul 13 zu dem ersten Sender-Empfängermodul 7 auf dem Zugfahrzeug 1 gefunkt und geht als Eingabewert in das Steuergerät 4 zusammen mit Messwerten der an der Sattelkupplung 5 angeordneten Sensoren 8a,b ein. Von dem Steuergerät 4 aus werden die Informationen zu der Anzeige- und Eingabeeinrichtung 10 übertragen.

Bei Absattelvorgängen betätigt der Fahrer die Anzeige- und Eingabeeinrichtung 10, um die Stützwinden 3 zu verfahren. Dabei geht ein Signal von der Anzeige- und Eingabeeinrichtung 10 zu dem Steuergerät 4. In dem Steuergerät 4 findet unter Berücksichtigung der Fahrzeugdaten aus dem Zentralsteuergerät 11 des Zugfahrzeuges 1 eine logische Überprüfung der Eingabe des Fahrers statt. Befindet sich beispielsweise das Zugfahrzeug 1 in Bewegung, ist es nicht möglich die Stützwinde 3 auszufahren. Darüber hinaus kann das Steuergerät 4 ein Öffnen der Sattelkupplung 5, ohne vorher die Stützwinde 3 ausgefahren zu haben, verhindern. Nach Abgleich und Überprüfung der Daten aus den Sensoren 8a,b der Sattelkupplung 5, des Zentral-Steuergerätes 11 und der Stützwinden 3 wird ein Signal des Steuergerätes 4 über das erste Sender-Empfängermodul 7 zu dem zweiten Sender-Empfängermodul 13 des Aufliegers 2 zu dem Kommunikationsgerät 6 der Stützwinde 3 gefunkt und von diesem der Motor 12 in Betrieb genommen. Nachfolgend kann die Sattelkupplung 5 geöffnet werden und das Zugfahrzeug 1 ohne Auflieger 2 bewegt werden.

Bei Aufsattelvorgängen finden die Arbeitsschritte in umgekehrter Reihenfolge statt.

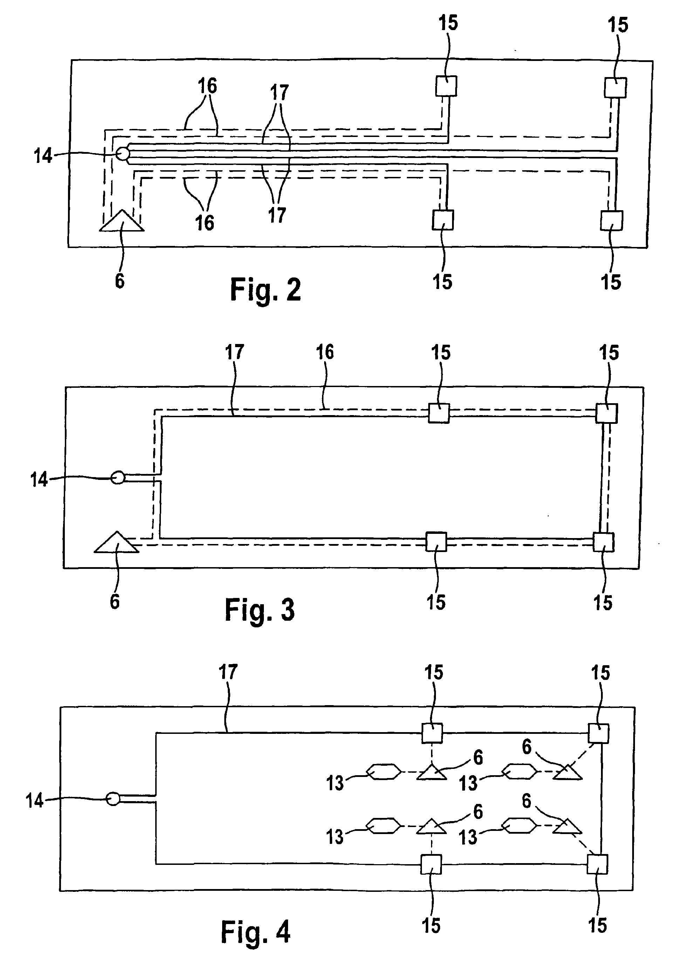

Die Figur 2 zeigt eine schematische Draufsicht des Aufliegers 2 mit einer Stromleitung 17 ausgehend vom Königszapfen 14 zu den Verbrauchern 15. Die elektrische Anbindung an das Zugfahrzeug 1 erfolgt über den Königszapfen 14. In Figur 2 ist für jeden Verbraucher 15 eine eigene Stromleitung 17 vorgesehen, die z.B in einem Kabelbaum mit anderen Stromleitungen 17 zusammengeführt sein kann. Die Ansteuerung der Verbraucher 15 wird über Steuerleitungen 16, ausgehend von dem Kommunikationsgerät 6 zu jedem Verbraucher 15, realisiert.

In Figur 3 werden die Verbraucher 15 über eine Stromleitung 17 als Ringleitung permanent mit Strom versorgt und ebenfalls über eine zweite als Ringleitung verlegte Steuerleitung 16 mit einem Bussystem angesprochen.

Darüber hinaus ist beispielsweise eine Kombination der in Figur 2 und Figur 3 dargestellten Ausführung möglich, bei der jeder Verbraucher 15 über eine eigene Stromleitung 17 angeschlossen ist, jedoch über eine Steuerleitung 16 als Ringleitung mit einem Bussystem angesteuert wird. Bei den Verbrauchern 15 mit einfacher Schaltfunktion (an/aus) kann eine Stromversorgung zum Kommunikationsgerät 6 und von dort unter Wegfall der Steuerleitung 16 ein Betrieb eines Verbrauchers 15 allein über die am Kommunikationsgerät 6 geschaltete Stromleitung 17 erfolgen.

Die Figur 4 zeigt als Stromleitung 17 eine Ringleitung zur Versorgung der Verbraucher 15, ausgehend vom Königszapfen 14. Abweichend von den Ausführungsformen in den Figuren 1 bis 3 besitzt jeder Verbraucher 15 ein eigenes Kommunikationsgerät 6 und ein eigenes zweites Sender-Empfängermodul 13 zur Ansteuerung des jeweiligen Verbrauchers 15.

### Bezugszeichenliste

- 1: Zugfahrzeug
- 2: Auflieger
- 3: Stützwinde
- 4: Steuergerät
- 5: Sattelkupplung
- 6: Kommunikationsgerät
- 7: erstes Sender-Empfängermodul
- 8a,b: Sensoren
- 9: Stellmotor
- 10: Anzeige- und Eingabeeinrichtung
- 11: Zentralsteuergerät
- 12: Motor
- 13: zweites Sender-Empfängermodul
- 14: Königszapfen
- 15: Verbraucher
- 16: Steuerleitung
- 17: Stromleitung
- 18: Fahrerhaus

## Patentansprüche

1. Überwachungs- und Steuervorrichtung für Sattelzüge mit einem Zugfahrzeug (1) mit fernbedienbarer Sattelkupplung (5) und einem Auflieger (2) mit mindestens einer elektrisch betriebenen Einrichtung wie Stützwinden (3), wobei die Überwachungs- und Steuervorrichtung über ein auf dem Zugfahrzeug (1) anordbares mit der Sattelkupplung (5) elektrisch verbindbares Steuergerät (4) und mindestens ein zweites auf dem Auflieger (2) anordbares Kommunikationsgerät (6), das mit der mindestens einen elektrisch betriebenen Einrichtung verbindbar ist, verfügt, und wobei das Steuergerät (4) und das Kommunikationsgerät (6) drahtlos miteinander verbunden sind,
**dadurch gekennzeichnet,**
**dass** das Steuergerät (4) an ein Zentralsteuergerät (11) des Zugfahrzeugs (1) anschließbar ist, wobei in dem Steuergerät (4) unter Berücksichtigung der Fahrzeugdaten aus dem Zentralsteuergerät (11) eine logische Überprüfung der Eingabe des Fahrers stattfindet.

2. Vorrichtung nach Anspruch 1, **dadurch gekennzeichnet, dass** das Steuergerät (4) ein erstes Sender-Empfängermodul (7) aufweist.

3. Vorrichtung nach einem der Ansprüche 1 oder 2, **dadurch gekennzeichnet, dass** das Steuergerät (4) mit an der Sattelkupplung (5) angeordneten Sensoren (8a,b) verbunden ist.

4. Vorrichtung nach einem der Ansprüche 1 bis 3, **dadurch gekennzeichnet, dass** das Steuergerät (4) mit einem Stellmotor (9) eines Verriegelungsmechanismus der Sattelkupplung (5) verbunden ist.

5. Vorrichtung nach einem der Ansprüche 1 bis 4, **dadurch gekennzeichnet, dass** das Steuergerät (4) mit einer im Fahrerhaus (18) befindlichen Anzeige- und Eingabeeinrichtung (10) verbunden ist.

6. Vorrichtung nach einem der Ansprüche 1 bis 5, **dadurch gekennzeichnet, dass** das Kommunikationsgerät (6) in einer der elektrischen Stützwinden (3) integriert ist.

7. Vorrichtung nach einem der Ansprüche 1 bis 6, **dadurch gekennzeichnet, dass** das Kommunikationsgerät (6) mit einem zweiten Sender-Empfängermodul (13) verbunden ist.

8. Vorrichtung nach einem der Ansprüche 1 bis 7, **dadurch gekennzeichnet, dass** das Kommunikationsgerät (6) mit einem Motor (12) in den elektrischen Stützwinden (3) verbunden ist.

9. Vorrichtung nach einem der Ansprüche 1 bis 8, **dadurch gekennzeichnet, dass** das Kommunikationsgerät (6) über eine Ringleitung und ein Bussystem mit weiteren elektrisch betriebenen Einrichtungen (15) des Aufliegers (2) verbunden ist.

10. Vorrichtung nach einem der Ansprüche 1 bis 9, **dadurch gekennzeichnet, dass** das Kommunikationsgerät (6) mit jeder Einrichtung (15) über ein Kabel verbunden ist.

11. Vorrichtung nach einem der Ansprüche 1 bis 10, **dadurch gekennzeichnet, dass** jede elektrisch betriebene Einrichtung ein eigenes Kommunikationsgerät (6) und ein eigenes Sender Empfängermodul (13) aufweist.

12. Vorrichtung nach einem der Ansprüche 1 bis 11, **dadurch gekennzeichnet, dass** das drahtlos verbundene Steuergerät (4) mit dem Kommunikationsgerät (6) codierte Signale austauscht.

13. Vorrichtung nach einem der Ansprüche 1 bis 12, **dadurch gekennzeichnet, dass** das drahtlos verbundene Steuergerät (4) mit dem Kommunikationsgerät (6) über Funk Signale überträgt.

14. Vorrichtung nach einem der Ansprüche 1 bis 13, **dadurch gekennzeichnet, dass** das drahtlos verbundene Steuergerät (4) mit dem Kommunikationsgerät (6) über Ultraschall Signale austauscht.

15. Vorrichtung nach einem der Ansprüche 1 bis 14, **dadurch gekennzeichnet, dass** das drahtlos verbundene Steuergerät (4) mit dem Kommunikationsgerät (6) induktiv Signale austauscht.

16. Vorrichtung nach einem der Ansprüche 1 bis 15, **dadurch gekennzeichnet, dass** das drahtlos verbundene Steuergerät (4) mit dem Kommunikationsgerät (6) über eine Infrarotschnittstelle Signale austauscht.

## Claims

1. Monitoring and control apparatus for articulated lorries comprising a towing vehicle (1) with remotely controllable fifth wheel (5) and a semi-trailer (2) with at least one electrically operated device such as landing gears (3), wherein the monitoring and control apparatus has a control unit (4), which can be arranged on the towing vehicle (1) and electrically connected to the fifth wheel (5), and at least one second communications device (6) that can be arranged on the semi-traller (2) and that can be connected to the at least one electrically operated device, and wherein the control unit (4) and the communications device (6) are wirelessly connected to each other,
**characterised in**
**that** the control unit (4) is connectable to a central control unit (11) of the towing vehicle (1), wherein a logical examination of the input of the driver takes place in the control unit (4) while taking into consideration the vehicle data from the central control unit (11).

2. Apparatus according to claim 1, **characterised in that** the control unit (4) has a first transmitter-receiver module (7).

3. Apparatus according to one of claims 1 and 2, **characterised in that** the control unit (4) is connected to sensors (8a, b) disposed on the fifth wheel (5).

4. Apparatus according to any one of claims 1 to 3, **characterised in that** the control unit (4) is connected to an actuator motor (9) of a locking mechanism of the fifth wheel (5).

5. Apparatus according to any one of claims 1 to 4, **characterised in that** the control unit (4) is connected to a display and input device (10) situated in the cab (18).

6. Apparatus according to any one of claims 1 to 5, **characterised in that** the communications device (6) is integrated In one of the electrical landing gears (3).

7. Apparatus according to any one of claims 1 to 6, **characterised in that** the communications device (6) is connected to a second transmitter-receiver module (13).

8. Apparatus according to any one of claims 1 to 7, **characterised in that** the communications device (6) is connected to a motor (12) in the electrical landing gears (3).

9. Apparatus according to any one of claims 1 to 8, **characterised in that** the communications device (6) is connected *via* a ring line and a bus system to further electrically operated devices (15) of the semi-trailer (2).

10. Apparatus according to any one of claims 1 to 9, **characterised in that** the communications device (6) is connected to each device (15) *via* a cable.

11. Apparatus according to any one of claims 1 to 10, **characterised in that** each electrically operated device has its own communications device (6) and its own transmitter-receiver module (13).

12. Apparatus according to any one of claims 1 to 11, **characterised in that** the wirelessly connected control unit (4) exchanges coded signals with the communications device (6).

13. Apparatus according to any one of claims 1 to 12, **characterised in that** the wirelessly connected control unit (4) transmits signals with the communications device (6) *via* radio.

14. Apparatus according to any one of claims 1 to 13, **characterised in that** the wirelessly connected control unit (4) exchanges signal with the communications device (6) *via* ultrasound.

15. Apparatus according to any one of claims 1 to 14, **characterised in that** the wire-lessly connected control unit (4) exchanges signals with the communications device (6) inductively.

16. Apparatus according to any one of claims 1 to 15, **characterised in that** the wirelessly connected control unit (4) exchanges signals with the communications device (6) *via* an infrared interface.

## Revendications

1. Dispositif de contrôle et de commande pour semi-remorques comprenant un véhicule tracteur (1) avec sellette d'attelage (5) pouvant être commandée à distance et une remorque (2) comprenant au moins un système exploité électriquement comme des béquilles de semi-remorque (3), le dispositif de contrôle et de commande disposant d'un appareil de commande (4) pouvant être disposé sur le véhicule tracteur (1) et pouvant être relié électriquement à la sellette d'attelage (5) et d'au moins un second appareil de communication (6) pouvant être disposé sur la remorque (2), qui peut être relié à le au moins un système exploité électriquement et l'appareil de commande (4) et l'appareil de communication (6) pouvant être reliés entre eux sans fil,
**caractérisé en ce que** l'appareil de commande (4) peut être raccordé à un appareil de commande central (11) du véhicule tracteur (1), un contrôle logique de l'entrée du conducteur ayant lieu dans l'appareil de commande (4) en tenant compte des données du véhicule provenant de l'appareil de commande central (11).

2. Dispositif selon la revendication 1, **caractérisé en ce que** l'appareil de commande (4) comporte un premier module émetteur-récepteur (7).

3. Dispositif selon l'une quelconque des revendications 1 ou 2, **caractérisé en ce que** l'appareil de commande (4) est relié à des capteurs (8a, b) disposés sur la sellette d'attelage (5) .

4. Dispositif selon l'une quelconque des revendications 1 à 3, **caractérisé en ce que** l'appareil de commande (4) est relié à un servomoteur (9) d'un mécanisme de verrouillage de la sellette d'attelage (5).

5. Dispositif selon l'une quelconque des revendications 1 à 4, **caractérisé en ce que** l'appareil de commande (4) est relié à un dispositif d'affichage et d'entrée (10) se trouvant dans la cabine de conduite (18).

6. Dispositif selon l'une quelconque des revendications 1 à 5, **caractérisé en ce que** l'appareil de communication (6) est intégré dans l'une des béquilles de semi-remorque (3) électriques.

7. Dispositif selon l'une quelconque des revendications 1 à 6, **caractérisé en ce que** l'appareil de communication (6) est relié à un second module émetteur-récepteur (13).

8. Dispositif selon l'une quelconque des revendications 1 à 7, **caractérisé en ce que** l'appareil de communication (6) est relié à un moteur (12) dans les béquilles de semi-remorque (3) électriques.

9. Dispositif selon l'une quelconque des revendications 1 à 8, **caractérisé en ce que** l'appareil de communication (6) est relié au moyen d'une ligne en boucle et d'un système de bus à d'autres systèmes (15) de la remorque (2) exploités électriquement.

10. Dispositif selon l'une quelconque des revendications 1 à 9, **caractérisé en ce que** l'appareil de communication (6) est relié à chaque système (15) au moyen d'un câble.

11. Dispositif selon l'une quelconque des revendications 1 à 10, **caractérisé en ce que** chaque système exploité électriquement présente un appareil de communication (6) propre et un module émetteur-récepteur (13) propre.

12. Dispositif selon l'une quelconque des revendications 1 à 11, **caractérisé en ce que** l'appareil de commande (4) relié sans fil échange des signaux codés avec l'appareil de communication (6).

13. Dispositif selon l'une quelconque des revendications 1 à 12, **caractérisé en ce que** l'appareil de commande (4) relié sans fil transmet des signaux par radio avec l'appareil de communication (6).

14. Dispositif selon l'une quelconque des revendications 1 à 13, **caractérisé en ce que** l'appareil de commande (4) relié sans fil échange des signaux par ultrason avec l'appareil de communication (6).

15. Dispositif selon l'une quelconque des revendications 1 à 14, **caractérisé en ce que** l'appareil de commande (4) relié sans fil échange des signaux par induction avec l'appareil de communication (6).

16. Dispositif selon l'une quelconque des revendications 1 à 15, **caractérisé en ce que** l'appareil de commande (4) relié sans fil échange des signaux avec l'appareil de communication (6) au moyen d'une interface infrarouge.
